# EUROPÄISCHE PATENTANMELDUNG

(11) **EP 3 308 623 A1**
(43) Veröffentlichungstag der Anmeldung: **18.04.2018**
(21) Anmeldenummer: 17190343.8
(22) Anmeldetag: 11.09.2017
(51) Int. Cl.: A01D 41/12

(54) **MÄHDRESCHER MIT STROHRUTSCHE UND STROHFÖRDERER**

(30) Priorität: 15.09.2016 DE 102016217609
(71) Anmelder: Deere & Company, Moline, IL 61265 (US)
(72) Erfinder: Diessner, Gregor, 68163 Mannheim (DE); Fries, Christina, 68163 Mannheim (DE); Fuchs, Volker, 68163 Mannheim (DE); Klein, Oliver, 68163 Mannheim (DE); Mischler, Peter, 68163 Mannheim (DE); Rittershofer, Martin, 68163 Mannheim (DE); Schubert, Dirk, 68163 Mannheim (DE)
(74) Vertreter: Holst, Sönke

(57) **Zusammenfassung**

Ein Mähdrescher (10) weist eine Strohrutsche (76) mit einem Strohförderer (86) auf, der einen in Rotation versetzbaren Förderrotor (114) mit wendeiförmig um den Förderrotor (114) verteilten Mitnehmern (116) umfasst.

## Beschreibung

Die Erfindung betrifft einen Mähdrescher mit einem in einer Vorwärtsrichtung über ein Feld bewegbaren Fahrgestell, einer Erntegutbearbeitungseinrichtung mit einem Auslass für Stroh, das in einem Schwadablagebetrieb einer Strohrutsche zuführbar ist und einem der Strohrutsche zugeordneten, das Stroh unter- oder oberschlächtig fördernden Strohförderer, der einen sich axial erstreckenden, in Rotation versetzbaren Förderrotor mit in Umfangsrichtung und in axialer Richtung um den Förderrotor verteilten Mitnehmern umfasst.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt. Die letztgenannte Lösung hat den Vorteil, dass man keinen separaten Kaffstreuer benötigt, erfordert jedoch, im Schwadbetriebsmodus das Stroh rückwärtig des Strohhäckslers vorbeizuleiten.

Ein Beispiel für einen derartigen Mähdrescher wird in der als gattungsbildend angesehenen DE 10 2005 040 125 A1 beschrieben. Das von der axialen Dresch- und Trenneinrichtung abgegebene Stroh wird durch einen Trommelförderer nach hinten abgeworfen. Im Häckselbetrieb prallt es gegen eine schwenkbare Klappe, die es nach unten in den Strohhäcksler leitet. Die Klappe kann für den Schwadablagebetrieb nach oben geschwenkt werden, in welchem das Stroh auf eine oberhalb des Strohhäckslers angeordnete Strohrutsche gelangt, auf der es nach unten gleitet und rückwärtig und oberhalb des Strohhäckslers auf das Feld abgegeben wird. Oberhalb der Strohrutsche ist ein unter- oder oberschlächtig arbeitender Strohförderer angeordnet, der als Trommelförderer oder Förderband ausgeführt sein kann.

### Aufgabe der Erfindung

Das im Schwad abgelegte Stroh sollte möglichst locker liegen, damit es ggf. noch etwas abtrocknen und problemlos mit einem Gutaufnehmer aufgesammelt werden kann. Der im Stand der Technik bekannte Trommel- oder Bandförderer nach DE 10 2005 040 125 A1 ist zwar in der Lage, das Stroh zu fördern, kann es aber kaum auflockern.

Die der Erfindung zu Grunde liegende Aufgabe wird darin gesehen, einen Mähdrescher eingangs genannter Art bereitzustellen, bei dem die erwähnten Probleme nicht oder im verminderten Maße auftreten.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mähdrescher ist mit einem in einer Vorwärtsrichtung über ein Feld bewegbaren Fahrgestell, einer Erntegutbearbeitungseinrichtung mit einem Auslass für Stroh, das in einem Schwadablagebetrieb einer Strohrutsche zuführbar ist und einem der Strohrutsche zugeordneten, das Stroh unter- oder oberschlächtig fördernden Strohförderer ausgestattet, der einen sich axial erstreckenden, in Rotation versetzbaren Förderrotor mit in Umfangsrichtung und in axialer Richtung um den Förderrotor verteilten Mitnehmern umfasst. Die Mitnehmer sind wendelförmig um den Förderrotor verteilt. Auf diese Weise erreicht man, dass die Mitnehmer nacheinander durch das Stroh kämmen und es auflockern.

Zwischen axial benachbarten Mitnehmern kann jeweils ein Abstreifer angeordnet sein.

Die Drehachse des Förderrotors kann zumindest etwa plan mit der Oberseite der Strohrutsche angeordnet sein, d.h. sich in der Ebene der Strohrutsche befinden. Der Abstreifer kann sich von einem stromauf des Förderrotors angeordneten Ende bogenförmig nach oben und bis rückwärtig des Förderrotors erstrecken. Dadurch vermeidet man Wickelprobleme des Strohs am Förderrotor und den Mitnehmern.

Die Mitnehmer können am axial äußeren Ende einen in Drehrichtung vorlaufenden Haken aufweisen.

Bei einer möglichen Ausführungsform sind die Mitnehmer auf einer exzentrisch zur Achse des Förderrotors angeordneten Welle abgestützt, wie es an sich von Abgabeförderern von Schneidwerken bekannt ist.

Der Förderrotor kann endseitig mit Querfördermitteln zur Schwadformung, insbesondere Förderwendeln, ausgestattet sein.

### Ausführungsbeispiel

Anhand der Abbildung werden fünf Ausführungsbeispiele der Erfindung erläutert. Es zeigt:
- Fig. 1: eine teilgeschnittene seitliche Ansicht eines Mähdreschers mit einer Strohrutsche und einem dieser zugeordneten Strohförderer zur Strohabförderung,
- Fig. 2: eine vergrößerte, perspektivische Ansicht des Strohförderers der Figur 1,
- Fig. 3: eine seitliche Ansicht des Förderrotors des Strohförderers aus Figur 1,
- Fig. 3a: eine seitliche Ansicht einer zweiten Ausführungsform des Förderrotors des Strohförderers aus Figur 1
- Fig. 4: eine perspektivische Ansicht einer dritten Ausführungsform eines Strohförderers,
- Fig. 5: eine perspektivische Ansicht einer vierten Ausführungsform eines Strohförderers,
- Fig. 6: eine perspektivische Ansicht einer fünften Ausführungsform eines Strohförderers, und
- Fig. 7: einen vertikalen Schnitt durch den Strohförderer der Figur 6.

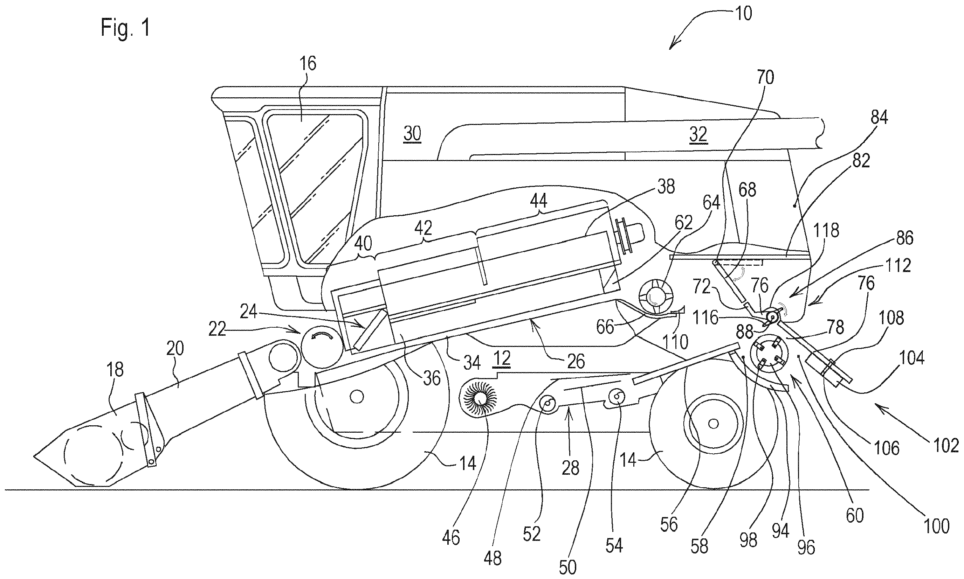

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 kann auch eine tangentiale Dreschtrommel und eine ihr folgende axiale Trenneinrichtung oder Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich eine Klappe 68, die zum Umschalten zwischen einem Schwadablagebetrieb und einen Häckselbetrieb dient. Oberhalb der Auswurftrommel 64 und der Klappe 68 ist eine sich horizontal und in Vorwärtsrichtung erstreckende obere Wand 82 angebracht, die einen darüber befindlichen Motorraum 84 nach unten abschließt. An der Wand 76 ist die Klappe 68 an ihrem vorderen, der Auswurftrommel 64 benachbarten Ende um eine sich horizontal und quer zur Vorwärtsrichtung erstreckende Achse 70 zwischen einer Schwadablageposition und einer Häckselposition verschwenkbar angelenkt. Die Klappe 68 erstreckt sich in ihrer Häckselposition, in der sie mit durchgezogenen Linien dargestellt ist, von der Achse 70 schräg nach hinten und unten. Unterhalb des unteren und rückwärtigen Endes der Klappe 68 schließt sich lückenlos ein mit dem Fahrgestell fest verbundenes Blech 72 an, das in eine sich schräg nach hinten und unten erstreckende Strohrutsche 76 übergeht, auf der das Stroh im Schwadablagebetrieb nach unten auf den Feldboden gleiten kann. Das Strohschwad kann noch durch an der Oberseite der Strohrutsche 76 angebrachte Leitkufen oder Strohleitrechen (nicht gezeigt) in eine gewünschte Form gebracht werden.

Die Klappe 68 ist um die Achse 70 zwischen der Häckselposition, in der sie in der Figur mit durchgezogenen Linien dargestellt ist, und einer Schwadablageposition verschwenkbar, in der die Klappe 68 in der Figur mit gestrichelten Linien dargestellt ist und sich parallel zur Wand 82 erstreckt. Am Anfang der Strohrutsche 76 ist ein Strohförderer 86 angebracht. Der Strohförderer 86 erstreckt sich horizontal und quer zur Vorwärtsrichtung und ist durch einen geeigneten Antrieb um seine Achse 88 (an der er drehbar, aber ansonsten positionsunveränderlich am Fahrgestell 12 befestigt ist) in eine Drehrichtung in Drehung versetzbar, in der er oberschlächtig arbeitet und in der Figur 1 im Uhrzeigersinn dreht, wie durch den Pfeil angedeutet. Zum Antrieb des Strohförderers 86 wird in der Regel ein Hydraulikmotor verwendet.

Unterhalb der Strohrutsche 76 befindet sich der Strohhäcksler 60, der sich aus einem Gehäuse 94 und einem darin angeordneten, um eine quer zur Vorwärtsrichtung und horizontal verlaufende Achse drehbaren Rotor 96 mit um den Umfang des Rotors 96 verteilten, pendelnd aufgehängten Häckselmessern 98 zusammensetzt. Stromab eines Auslasses 100 des Strohhäckslers 60 ist sind zwei seitlich nebeneinander unterhalb der Strohrutsche 76 angeordnete Gebläse 102 vorgesehen, von denen in der Figur 1 nur ein einziges erkennbar ist. Die Gebläse 102 umfassen eine Anzahl an Luftschaufeln 104, die jeweils starr mit einer sich orthogonal zur Strohrutsche 76 erstreckenden Welle 106 verbunden sind. Die Welle 106 ist durch jeweils einen Hydraulikmotor 108 in Drehung versetzbar. In der Schwadablageposition fördert der Strohhäcksler 60 nur die Erntegutreste aus dem Reinigungssystem 28 zu den Gebläsen 102, welche sie etwa über die Breite des Schneidwerks 18 auf dem Feldboden verteilen. Anstelle der Gebläse 102 kann auch eine Anzahl seitlich nebeneinander angeordneter, starrer bzw. vibrierender Strohleitbleche verwendet werden. Weiterhin könnte der Strohhäcksler 60 auch ein von der Strohrutsche 78 unabhängiges oberes Gehäuse erhalten, an dem auch die Gebläse 102 befestigt werden könnten.

Zur Schwadablage (Langstrohablage) des Strohs ist die Klappe 68 in ihre (gestrichelt dargestellte) Schwadablageposition verbringbar, durch einen geeigneten Hebel von Hand durch den Bediener, oder mittels eines fremdkraftbetätigten Antriebs (nicht gezeigt) von der Bedienerkabine 16 aus. Das Stroh wird vom Auslass 62 der Erntegutbearbeitungseinrichtung 26 der Auswurftrommel 64 zugeführt, die es im freien Flug durch die von der Klappe 68 freigegebene Öffnung zum Strohförderer 86 wirft. Durch stromab der Auswurftrommel 68 angeordnete, vorzugsweise verstellbare Leitkufen 110 kann die seitliche Verteilung des Strohs optimiert werden. Der Strohförderer 86 wird oberschlächtig betrieben. Somit wird das Stroh durch den Strohförderer 86 aktiv nach hinten gefördert und entlang der Strohrutsche 76 gefördert, auf der es durch eine rückwärtige Auswurföffnung 112 des Mähdreschers 10 auf den Feldboden rutscht.

In der Häckselposition ist die Klappe 68 gegenüber der Schwadablageposition um die Schwenkachse 70 nach unten verschwenkt, wie in der Figur 1 gezeigt. Das von der Auswurftrommel 64 gegen die Klappe 68 geworfene Stroh wird durch die Klappe 68 nach unten abgelenkt und fällt nach unten in den Einlass 58 des Strohhäckslers 60, der es gemeinsam mit den Erntegutresten aus dem Reinigungssystem 28 häckselt und mittels der Gebläse 106 auf dem Feldboden verteilt. Beim Häckselbetrieb kann der Strohförderer 86 stillstehen.

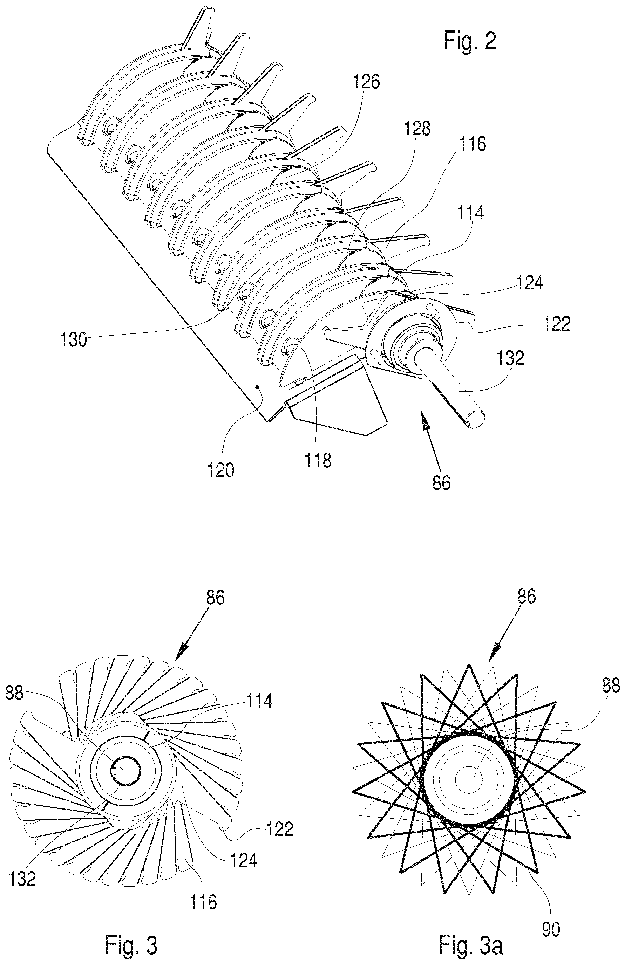

Die Figuren 2 und 3 zeigen den Strohförderer 86 der Figur 1 in vergrößerter Darstellung. Der Strohförderer 86 umfasst einen Förderrotor 114, an dem in axialer Richtung beabstandete Förderscheiben 124 mit daran angebrachten Mitnehmern 116 befestigt sind. Der Förderrotor 114 ist modular aufgebaut, d.h. umfasst eine mittige Welle 132, auf die alternierend die plattenförmigen Förderscheiben 124 mit den Mitnehmern 116 und zylindrische Abschnitte 126 aufgesetzt und fixiert werden. Ein derartiger Förderrotor 114 ist beispielsweise in der DE 10 2014 220 830 B3 und der DE 10 2014 225 898 A1 sowie der DE 10 2012 204 416 A1 und den dort jeweils zitierten Dokumenten beschrieben, deren Offenbarung durch Verweis mit in die vorliegenden Unterlagen aufgenommen wird.

Die Förderscheiben 124 umfassen jeweils zwei sich diametral gegenüber liegende Mitnehmer 116. Die Mitnehmer 116 weisen in Drehrichtung vorlaufende Haken 122 an ihren äußeren Enden auf. An der stromauf liegenden Seite sind dem Förderrotor 114 Abstreifer 118 zugeordnet, die sich jeweils zwischen zwei Förderscheiben 124 befinden. Die Abstreifer 118 erstrecken sich bogenförmig von einem vorderen Leitblech 120, das an der Strohrutsche 76 oder dem Blech 72 befestigt ist und auch entfallen könnte, nach hinten und oben und dann wieder nach unten bis rückwärtig der zylindrischen Abschnitte 126. Die beidseits einer Förderscheibe 124 angeordneten Abstreifer 118 lassen zwischen sich einen Spalt 128, durch den sich der Mitnehmer 116 nach oben hinaus erstrecken kann. Jeweils zwischen zwei Spalten 128 angeordnete Abstreifer 118 sind untereinander durch eine Rampe 130 verbunden, die in Querrichtung gegenüber den Abstreifern 118 muldenförmig vertieft ist und in Flussrichtung des Ernteguts bogenförmig ansteigt und vor den zylindrischen Abschnitten 126 wieder absinkt. Die Achse 88 des Förderrotors 114 liegt etwa in der Ebene der Oberseite der Strohrutsche 76 oder geringfügig darüber.

Wie in der Figur 3 erkennbar, sind die Mitnehmer 116 wendelförmig angeordnet. Dadurch erhält man eine kämmende, das Stroh auflockernde Wirkung des Strohförderers 86. Die (in der Figur 2 gezeigten) Abstreifer 118 verhindern ein Wickeln des Strohs am Förderrotor 114, wozu auch die Rampen 130 beitragen, die das Stroh anheben und über die zylindrischen Abschnitten 114 leiten. Die Mitnehmer 116 können auch rautenförmig sein, wie in der Figur 3a gezeigt.

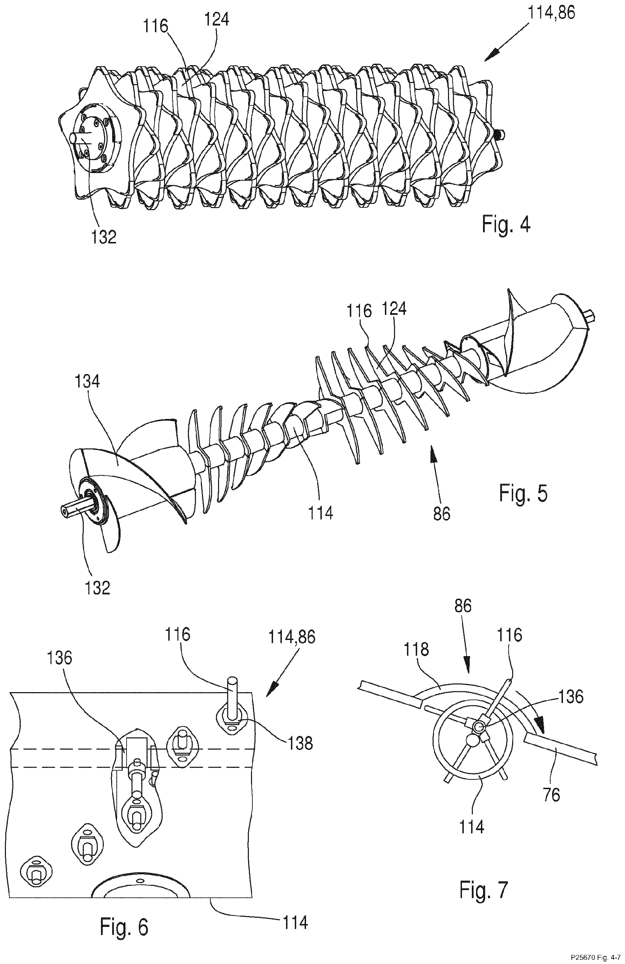

Die Figur 4 zeigt eine dritte Ausführungsform eines Förderrotors 114 eines Strohförderers 86, der anstelle des Förderrotors 114 der Figuren 1 bis 3 treten kann. Bei dem Förderrotor 114 umfassen die sternförmigen Förderscheiben 124 jeweils fünf Mitnehmer 116. Die Mitnehmer 116 sind ebenfalls wendelförmig angeordnet.

Die Figur 5 zeigt eine vierte Ausführungsform eines Förderrotors 114 eines Strohförderers 86, der anstelle des Förderrotors 114 der Figuren 1 bis 3 treten kann. An den äußeren Enden ist der Förderrotor 114 mit wendelfömigen Querfördermitteln 134 zur Schwadformung ausgestattet. Hierfür ist die Strohrutsche 76 mit entsprechenden Ausschnitten zu versehen. Die Mitnehmer 116 weisen gerade, sich etwa radial erstreckende oder nach vorn gekrümmte vorlaufende Kanten auf. Die geraden oder gekrümmten, vorlaufenden Kanten könnten auch entgegen der Drehrichtung nach hinten abgewinkelt sein, analog zur Ausführungsform nach Figur 3a.

Die Figuren 6 und 7 zeigen eine fünfte Ausführungsform eines Förderrotors 114 eines Strohförderers 86, der anstelle des Förderrotors 114 der Figuren 1 bis 3 treten kann. Der Förderrotor 114 umfasst eine exzentrisch gelagerte, feststehende Achse 136, auf der die fingerförmigen, sich durch Führungen im Mantel des Förderrotors 114 erstreckenden Mitnehmer 116 einzeln gelagert sind. Derartige Anordnungen sind an sich von Abgabeförderern von Schneidwerken her bekannt, vgl. EP 1 040 749 A1. Die Finger können sich radial erstrecken oder sämtlich (vgl. DE 10 2013 206 515 A1) oder nur an äußeren, konischen Enden des Förderrotors 114 (vgl. EP 2 769 612 A1) zur Seite geneigt sein, um das Schwad zu formen. Bei der vierten Ausführungsform könnten die Abstreifer 118 entfallen.

## Patentansprüche

1. Mähdrescher (10) mit einem in einer Vorwärtsrichtung über ein Feld bewegbaren Fahrgestell (12), einer Erntegutbearbeitungseinrichtung (26) mit einem Auslass (62) für Stroh, das in einem Schwadablagebetrieb einer Strohrutsche (76) zuführbar ist und einem der Strohrutsche (76) zugeordneten, das Stroh unter- oder oberschlächtig fördernden Strohförderer (86), der einen sich axial erstreckenden, in Rotation versetzbaren Förderrotor (114) mit in Umfangsrichtung und in axialer Richtung um den Förderrotor (114) verteilten Mitnehmern (116) umfasst, **dadurch gekennzeichnet, dass** die Mitnehmer (116) wendelförmig um den Förderrotor (114) verteilt sind.

2. Mähdrescher (10) nach Anspruch 1, wobei zwischen axial benachbarten Mitnehmern (116) jeweils ein Abstreifer (118) angeordnet ist.

3. Mähdrescher (10) nach Anspruch 2, wobei die Drehachse (88) des Förderrotors (114) zumindest etwa plan mit der Oberseite der Strohrutsche (76) angeordnet ist und der Abstreifer (118) sich von einem stromauf des Förderrotors (114) angeordneten Ende bogenförmig nach oben und bis rückwärtig des Förderrotors (114) erstreckt.

4. Mähdrescher (10) nach einem der Ansprüche 1 bis 3, wobei die Mitnehmer (116) am axial äußeren Ende einen in Drehrichtung vorlaufenden Haken (122) aufweisen.

5. Mähdrescher (10) nach einem der Ansprüche 1 bis 4, wobei die Mitnehmer (116) auf einer exzentrisch zur Drehachse (88) des Förderrotors (114) angeordneten Welle (136) abgestützt sind.

6. Mähdrescher (10) nach einem der Ansprüche 1 bis 5, wobei der Förderrotor (114) endseitig mit Querfördermitteln (134) zur Schwadformung, insbesondere Förderwendeln, ausgestattet ist.
